# EUROPÄISCHE PATENTANMELDUNG

(11) **EP 1 553 235 A2**
(43) Veröffentlichungstag der Anmeldung: **13.07.2005**
(21) Anmeldenummer: 05000187.4
(22) Anmeldetag: 06.01.2005
(51) Int. Cl.: E03F 7/02

(54) **Vorrichtung zur Veränderung des freien Strömungsquerschnitts eines Rohres oder Kanals**

(30) Priorität: 09.01.2004 DE 102004001375
(71) Anmelder: Ise, Gerd, Dr., 52070 Aachen (DE); Dumont, Ulrich Dipl.-Ing., 52134 Herzogenrath (DE); Kessels, Norbert, 52477 Alsdorf (DE)
(72) Erfinder: Ise, Gerd, Dr., 52070 Aachen (DE); Dumont, Ulrich, 52134 Herzogenrath (DE); Kessels, Norbert, 52477 Alsdorf (DE)
(74) Vertreter: Bauer, Dirk, Dipl.-Ing. Dipl.-Kfm.

(57) **Zusammenfassung**

Eine Vorrichtung (1) zur Veränderung des freien Strömungsquerschnitts (13) eines Rohres (2) oder Kanals weist eine Halteeinrichtung (5) für ein Sperrorgan (3) auf, das eine flexible Membran (4o, 4u) besitzt. Die flexible Membran (4o, 4u) begrenzt einen fluiddicht abgeschlossenen Innenraum (10) des Sperrorgans (3), wobei dieses ausgehend von einem entleerten Zustand durch Beaufschlagung des Innenraums (10) mit einem Druckmedium in einen gefüllten Zustand überführbar und dadurch volumenmäßig vergrößerbar ist. Der freie Strömungsquerschnitt im befüllten Zustand ist dabei kleiner als im entleerten Zustand.

Um mit einer derartigen Vorrichtung auch den Volumenstrom lediglich drosseln und nicht nur gänzlich unterbinden zu können und gleichzeitig auf Sprünge in der Sohle verzichten zu können, wird vorgeschlagen, dass die Halteeinrichtung (5) so angeordnet ist, dass sich auf im Querschnitt gegenüberliegenden Seiten des Sperrorgans (3) im entleerten Zustand jeweils ein Teil des freien Strömungsquerschnitts (13) befindet.

## Beschreibung

Die Erfindung betrifft eine Vorrichtung zur Veränderung des freien Strömungsquerschnitts eines Rohres oder Kanals, mit einer Halteeinrichtung für ein Sperrorgan, das eine flexible Membran aufweist, die einen fluiddicht abgeschlossenen Innenraum des Sperrorgans begrenzt, wobei das Sperrorgan, ausgehend von einem entleerten Zustand durch Beaufschlagung des Innenraums mit einem Druckmedium in einen gefüllten Zustand überführbar und dadurch volumenmäßig vergrößerbar ist, wobei der freie Strömungsquerschnitt im gefüllten Zustand kleiner als im entleerten Zustand ist.

Eine derartige Vorrichtung ist in Form einer sogenannten Kanalsperre für Abwasserkanäle aus der DE 196 46 223 A 1 bekannt. Bei bestimmten zufließenden Abwassermengen soll eine derartige Vorrichtung manuell oder auch automatisch aktiviert werden, um den Wasserdurchfluss im Kanal zu regulieren und insbesondere bei großen Mengen an zufließendem Abwasser eine Zwischenspeicherung in den stromaufseitigen Kanalabschnitten zu ermöglichen. Eine andere Aufgabe derartiger Vorrichtungen kann auch darin bestehen, den Wasserstand in einem Kanal- oder Rohrsystem periodisch durch Aufblasen des Sperrorgans anzuheben und anschließend, ausgehend von einer maximal gefüllten Stellung möglichst rasch wieder in die entleerte Stellung zu überführen, um dadurch im Strom abwärts der Vorrichtung liegenden Teil des Rohr- oder Kanalsystems eine Flutwelle auszulösen, mit der beispielsweise Ablagerungen auf der Sohle des Kanals oder des Rohres weggespült werden sollen.

Bei den Sperrorganen der bekannten Kanalsperren kann es sich um an der Sohle befestigte Schlauchkörper handeln, wie sie insbesondere aus sogenannten Schlauchwehren bekannt sind, die zur Regulierung offener Fließgewässer eingesetzt werden. Die Befestigung der Membran des Schlauchkörpers an den sohlennahen Wandungsbereichen des Kanals erfolgt mit Hilfe sogenannter Klemmschienen, die eine fluiddichte Verbindung der übereinander angeordneten Membranränder ermöglichen. Es ist aber auch möglich, die Membran randseitig umlaufend unmittelbar mit der jeweiligen Kanalwandung zu verbinden. Die Unterseite des Sperrorgans wird dann z. B. durch den Beton der Kanalwandung gebildet, der zu diesem Zweck mit einer druckdichten Isolierstoffschicht ausgekleidet sein kann. Die Kanalsperre kann aber auch in einer hochfesten Beton- oder Stahlschale vormontiert sein, die bereits mit der Isolierstoffschicht und weiteren Bauelementen versehen ist und so ein einbaufähiges Segment eines Kanals bildet.

Als grundsätzlich nachteilig ist es bei derartigen Kanalsperren anzusehen, daß sich im Bereich der Vorrichtung an der Sohle des Kanals eine Stufe einstellt, da das dort befestigte Sperrorgan auch in seiner vollständig entleerten Stellung immer eine gewisse Höhe aufweist. Diese setzt sich zumindest aus der einfachen Materialstärke der Membran und einer darüber angeordneten Klemmschiene zusammen. Es besteht die Gefahr, dass sich hinter einer derartigen Stufe im deaktivierten Zustand der Kanalsperre Ablagerungen absetzen, da dort ein Totwasserbereich entsteht.

Des weiteren zählen noch sogenannte "Spülsäcke" zum allgemein bekannten Stand der Technik. Hierbei handelt es sich um Staukörper in Form von Kissen oder Säcken aus in der Regel bewehrten, einteiligen Membranen, die im aufgeblasenen Zustand die Form eines kugel-, eiförmigen oder zylindrischen Körpers bilden. Die Größe der Sperrkörper ist so bemessen, daß diese im aufgeblasenen Zustand mit der Membrane umlaufend an der Innenwand des Kanales oder des Rohres bzw. des jeweiligen hydraulischen Bauwerks anliegen und durch den Innendruck gegen diese Wandung gedrückt werden. Die aus dem Staudruck auf den Staukörper wirkenden Kräfte werden zum Teil durch die Reibkräfte zwischen der Membrane und der Bauwerkswand aufgenommen. Die bekannten Staukörper werden in der Regel zusätzlich durch Seile oder den Füllschlauch in der Position im Bauwerk fixiert.

Über den bereits erwähnten Schlauch erfolgt die Befüllung derartiger Spülsäcke von einem Verdichter aus, der außerhalb des abzusperrenden Rohres oder Kanals beispielsweise in einem separaten unterirdischen oder oberirdischen Bauwerk angeordnet ist. Zur Entleerung des Sperrorgans wird über den Schlauch eine Verbindung mit der Umgebung hergestellt, wobei die auf den Staukörper wirkenden Strömungskräfte für ein Herausdrücken der Luft sorgen.

Als nachteilig ist es bei derartigen Spülsäcken anzusehen, daß diese keine feste Verbindung mit den Kanal- oder Rohrwandungen oder dem sonstigen Bauwerk besitzen. Sie können daher bei bestimmten Strömungssituationen Bewegungen und Schwingungen ausführen und durch den Kontakt mit der vergleichsweise weichen und verletzlichen Membran mit rauhen und harten Bauwerksteilen beschädigt werden. Insbesondere sind derartige Spülsäcke nicht dazu geeignet, den freien Strömungsquerschnitt eines Rohres oder Kanals in einem genau definierten Maß zu reduzieren, um beispielsweise einen Restdurchfluss aufrecht zu erhalten. Einziger Anwendungsfall derartiger Vorrichtungen ist daher die vollständige Absperrung bzw. im anderen Fall die möglichst vollständige Freigabe des Strömungsquerschnitts. Sie werden daher häufig bei Bedarf eines vollständigen Absperrens des Querschnitts, z. B. bei Reparaturen oder zur Spülung von Kanalquerschnitten eingesetzt, wo dem vollständigen Versperren eine möglichst rasche Querschnittsfreigabe folgen soll.

Der Erfindung liegt die Aufgabe zu Grunde, eine Vorrichtung zur Veränderung des freien Strömungsquerschnitts eines Rohres oder Kanals vorzuschlagen, bei der auf die Ausbildung einer Stufe in der Sohle im Bereich der Vorrichtung verzichtet werden kann und die sich des weiteren auch dazu eignet, einen bestimmten, genau definierten Restquerschnitt des gesamten Strömungsquerschnitts freizulassen, d. h. eine definiert Drosselwirkung zu erfüllen.

Ausgehend von einer Vorrichtung der Eingangs beschriebenen Art wird diese Aufgabe erfindungsgemäß dadurch gelöst, dass die Halteeinrichtung so angeordnet ist, dass sich auf im Querschnitt des Rohres oder Kanals gegenüberliegenden Seiten des Sperrorgans im entleerten Zustand jeweils ein Teil des freien Strömungsquerschnitts findet.

Durch die erfindungsgemäße Anordnung des Sperrorgans ist es möglich, dieses - über die Halteeinrichtung fest mit dem Rohr oder Kanal verbunden - in einer Mittelstellung zwischen der Sohle und beispielsweise einer oberen Kanal- oder Rohrwandung anzuordnen. Die Erfindung ermöglicht es jedenfalls, im Bereich der Sohle keine Einbauten zur Halterung der Vorrichtung anzuordnen, so dass die Sohle frei von irgendwelchen Stufen bleiben kann, so daß die Gefahr der Bildung von Ablagerungen in hinter Stufen auftretenden Totwassern nicht gegeben ist.

Es liegt aber gleichfalls im Rahmen der vorliegenden Erfindung, das Sperrorgan im Querschnitt beispielsweise in vertikale Richtung anzuordnen, so dass sich im entleerten Zustand ein linker und ein rechter Teil des Querschnitts ergeben.

Es liegt gleichfalls im Rahmen der Erfindung, dass lediglich eine einzige flexible Membran vorgesehen ist, die sich bei einer Druckbeaufschlagung in einen der beiden Teile des freien Strömungsquerschnitts erstreckt, wohingegen das Sperrorgan in Richtung des gegenüberliegenden Teils des freien Strömungsquerschnitts starr ist, so dass sich dessen Größe nicht verändert. Es ist jedoch ebenso möglich, dass das Sperrorgan zwei an gegenüberliegender Seiten angeordnete Membranen aufweist, die sich im Falle einer Druckbeaufschlagung - beispielsweise eines einzigen Innenraums - in entgegengesetzte Richtungen ausdehnen und somit beide Teile des freien Strömungsquerschnitts verringern. Des weiteren ist es möglich, im Falle zweier Membranen den Innenraum beispielsweise durch eine starre fluiddichte Mittelwand zu teilen, um eine Membranauslenkung in die eine Richtung unabhängig von einer Membranauslenkung in die andere Richtung vornehmen zu können.

Es liegt ebenfalls im Rahmen der vorliegenden Erfindung, dass der Sperrkörper allseits - abgesehen von speichenartigen Halterungsorganen - von der Strömung umgeben ist und der Strömungsquerschnitt ein mehr oder weniger großer Ringraum ist, der sich bedarfsweise auch ganz verschließen lässt.

Der besondere Vorteil der vorliegenden Erfindung gegenüber den bekannten Spülsäcken liegt darin, dass die erfindungsgemäße Vorrichtung über die Halteeinrichtung fest mit dem Bauwerk, d. h. den Wandungen des Kanals bzw. des Rohres, verbunden ist. Unkontrollierte Bewegungen in Folge von Strömungskräften, wie sie auf das Sperrorgan wirken, können bei der Erfindung bei entsprechender Dimensionierung somit vermieden werden. Dies erlaubt es insbesondere, die Vorrichtung auch zum definierten Drosseln des Durchflusses und nicht nur zum vollständigen Absperren bzw. Freigeben zu nutzen.

Der Herstellungsaufwand für die Halteeinrichtung des Sperrorgans ist besonders niedrig, wenn eine von der Halteeinrichtung aufgespannte Ebene im Querschnitt des Rohres oder Kanals als Sehne verläuft. Gleichwohl ist es selbstverständlich ebenfalls vom Gedanken der Erfindung umfasst, wenn die Halteeinrichtung im Querschnitt des Rohres oder Kanals als Poligonzug verläuft, falls besondere Anforderungen an die Vorrichtung eine derartige Gestaltung für sinnvoll bzw. erforderlich erscheinen lassen.

Eine bevorzugte Ausführungsform der Erfindung liegt darin, dass die Halteeinrichtung und/ oder das Sperrorgan im entleerten Zustand horizontal ausgerichtet ist. Im entleerten Zustand der Vorrichtung wird bei niedrigen Volumenströmen somit lediglich der untere Teil des freien Strömungsquerschnitts überströmt, wobei innerhalb der Sohle keinerlei Einbauten vorhanden sein müssen. Erst bei Überschreiten eines bestimmten Volumenstroms steigt der Wasserspiegel so weit an, dass auch der obere Teil des freien Strömungsquerschnitts durchströmt wird. In diesem Fall wirkt das Sperrorgan als Strömungsteiler und sollte an seiner entgegen der Strömung weisenden Stirnseite strömungsgünstig ausgeformt sein. Insbesondere ist eine geringe Bauhöhe der Haltevorrichtung und des Sperrorgans anzustreben.

Eine besonders einfache und zuverlässige Möglichkeit, wie eine stabile Halteeinrichtung erzielt werden kann, besteht darin, dass die Halteeinrichtung ein Rahmen ist, an dem die elastisch dehnbare Membran umlaufend befestigt ist. Die Befestigung erfolgt sinnvollerweise über geschraubte Klemmschienen, wie sie aus dem Stand der Technik bekannt sind.

Um das Aufblähverhalten der elastisch dehnbaren Membrane zu optimieren, wird vorgeschlagen, dass der Rahmen in der Draufsicht achteckig oder oval ist. Vorzugsweise betragen bei einem Achteck alle Winkel zwischen benachbarten Seiten 135°, wobei die in Strömungsrichtung verlaufenden Seiten des Achtecks länger als die senkrecht zur Strömungsrichtung verlaufenden Seiten sind. Letztere Seiten haben ungefähr die selbe Länge wie die unter einem Winkel von 135° hierzu verlaufenden "abschrägenden" Seiten. Ein ovalförmiger oder elliptischer Rahmen wird mit seinem größeren Durchmesser bzw. Längsachse parallel zu der Rohr- oder Kanalachse eingebaut.

Alternativ und/ oder ergänzend zu der vorgenannten Rahmenkonstruktion kann die Halteeinrichtung auch eine Platte aufweisen, an der die elastisch dehnbare Membran umlaufend - wiederum beispielsweise mittels Klemmschienen - befestigt ist. Die Steifigkeit der Halteeinrichtung gegenüber einer Verbiegung sowie Verdrehung kann insbesondere durch eine Kombination einer Rahmenbauweise mit verstärkender Platte optimiert werden, wobei einer derartigen Konstruktion gegenüber einer bloßen Rahmenkonstruktion die Bauhöhe reduziert wird, wodurch die Strömungsverluste im entleerten Zustand sowie die Reduzierung der freien Querschnittsfläche innerhalb kleiner Grenzen gehalten werden kann.

Vorzugsweise sollte die größte Breite der Halteeinrichtung dem Durchmesser des Rohres oder Kanals entsprechen, damit die Verankerung der Halteeinrichtung an den Rohr- bzw. Kanalwandungen möglichst einfach und mit kurzen Ankerelementen erfolgen kann.

Ein Abfangen der sowohl im entleerten als auch im gefüllten Zustand des Sperrorgans auftretenden stromabwärts gerichteten Kräfte kann mit Hilfe mindestens eines am Rohr oder dem Kanal befestigten Halteelements erfolgen. Dies kann beispielsweise als mit der Rohroder Kanalwandung verschraubter Halteschuh ausgebildet sei, der mit einer abgeschrägten Stirnseite der Halteeinrichtung korrespondiert.

Um eine möglichst vollständige Absperrung des freien Strömungsquerschnitts zu erzielen, ist nach der Erfindung weiter noch vorgesehen, dass in Zwickelbereichen zwischen der Wandung des Rohres oder Kanals und der Membran in gefülltem Zustand des Sperrorgans Verschlusselemente angeordnet sind. Hierbei kann es sich um mit der Rohr- oder Kanalwandung verschraubte Bleche handeln, deren Material so auszuwählen ist, dass sie den im Rohr bzw. Kanal strömenden Medien langfristig widerstehen können. Die gleiche Verschlussfunktion kann alternativ auch durch ein spezielles im Querschnitt entsprechend geformtes Rohr- oder Kanalstück erfüllen.

Um den Befüllvorgang zu beschleunigen, d. h. die Zeitspanne bis zum Erreichen eines bestimmten Verschlussgrades des Strömungsquerschnitts zur verkürzen, kann die Vorrichtung mit einem Behälter kombiniert werden, in dem Druckmedium zur Befüllung des Innenraums des Sperrorgans speicherbar ist. Beim Befüllen des Innenraums können beispielsweise ein Verdichter oder eine Pumpe parallel betrieben werden, wenn der Behälter entleert wird.

Während der Behälter grundsätzlich auch mit einer elastischen Membran versehen sein kann, dann jedoch wegen der Druckbegrenzung ein sehr großes Volumen aufweisen muss, ist ein starrer Behälter vorzuziehen, der zudem auch als Unterdruckbehälter zur Entleerung des Innenraums des Sperrorgans nutzbar ist.

Eine Beschleunigung sowohl des Entleerungs- als auch des Befüllungsvorgangs - jeweils in Kombination mit einem Überdruck-/ Unterdruckbehälter - ist erzielbar, wenn ein Verdichter oder eine Pumpe zur Förderung des Druckmediums sowohl zur Druckerhöhung bei der Befüllung des Innenraums des Speicherorgans als auch zur Druckabsenkung bei der Entleerung des Speicherorgans verwendbar ist.

Die Erfindung wird nachfolgend anhand eines Ausführungsbeispiels einer Vorrichtung, die in der Zeichnung näher dargestellt ist, erläutert. Es zeigt:
- Fig. 1: eine Vorrichtung im Querschnitt;
- Fig. 1a: wie Figur 1, jedoch mit einer alternativen Form eines Profils des Rahmens der Halteeinrichtung;
- Fig. 2: einen Längsschnitt durch die Vorrichtung gemäß Fig.1 und
- Fig. 3: eine Draufsicht auf die Vorrichtung nach den Figuren 1 und 2.

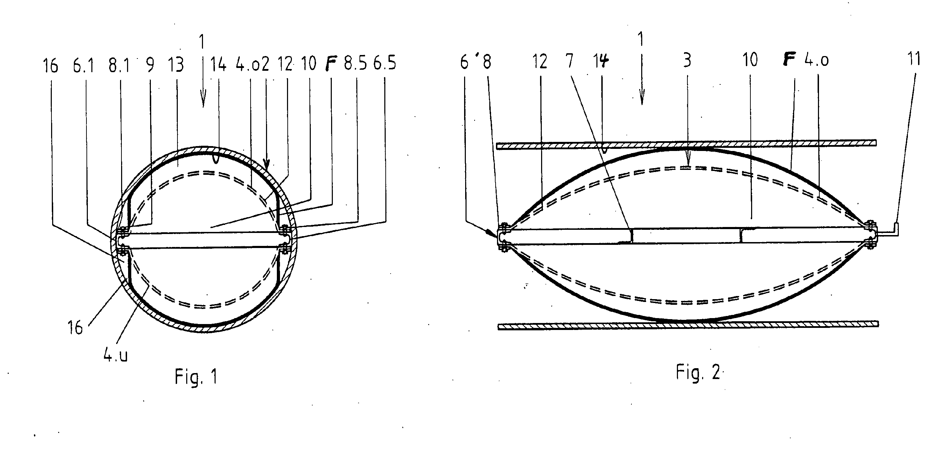

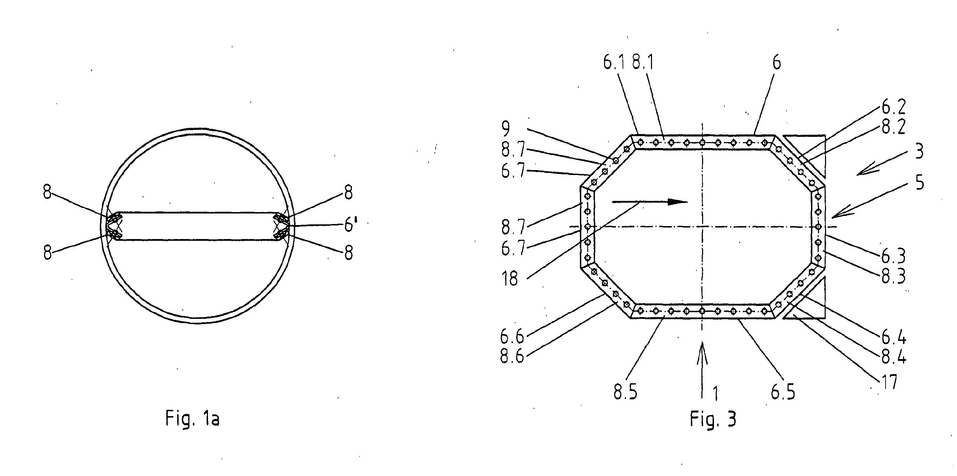

Die in den Figuren 1 bis 3 gezeigte Vorrichtung 1 zur Veränderung des freien Strömungsquerschnitts eines kreisförmigen Rohres 2 besitzt ein Sperrorgan 3, das zwei flexible, elastisch dehnbare Membranen 4o und 4u und eine Halteeinrichtung 5 umfasst. Die Halteeinrichtung 5 besteht aus einem Rahmen 6 aus acht Rahmenschenkeln 6.1 bis 6.8, die in der Draufsicht gemäß Figur 3 ein Achteck bilden und jeweils miteinander einen Winkel von 135° einschließen. Die einzelnen Rahmenschenkel 6.1 bis 6.8 sind auf Gehrung geschnittene Profilstücke und miteinander verschweißt oder auf andere Weise miteinander kraftschlüssig verbunden. Des weiteren befinden sich in Querrichtung des Rahmens 6 zwei L-förmige Versteifungsprofile 7, die mit den übrigen Rahmenschenkeln verschweißt oder wiederum anders verbunden sind, und der gesamten Konstruktion eine erhöhte Steifigkeit verleihen.

Wie sich den Figuren 1 und 2 entnehmen lässt, sind beidseitig des Rahmens 6 jeweils ebenfalls acht Abschnitte 8.1 bis 8.8 eines Klemmschienenprofils 8 angeordnet, die im Wesentlichen deckungsgleich zu den darunter angeordneten Rahmenschenkeln 6.1 bis 6.8 verlaufen. Jeweils zwischen den Abschnitten 8.1 bis 8.8 des Klemmschienenprofils 8 und den zugeordneten Rahmenschenkeln 6.1 bis 6.8 des Rahmens 6 befinden sich auf jeder Seite des Rahmens 6 jeweils eine Membran 4o und 4u. Mit Hilfe eine Vielzahl von Schrauben 9 ist das Klemmschienenprofil 8 mit dem Rahmen 6 verspannt, so wie dies beispielsweise bei Schlauchwehrkonstruktionen bekannt ist. Zwischen den beiden Membranen 4o und 4u und seitlich begrenzt durch den Rahmen 6 wird somit ein fluiddicht abgeschlossener Innenraum 10 des Sperrorgans 3 gebildet, der über eine stirnseitig den Rahmen 6 durchdringende Leitung 11 mit einem Druckmittel beaufschlagbar ist. Hierzu befindet sich im Anschluss an die Leitung 11 ein zeichnerisch nicht dargestellter Verdichter für Luft zum Befüllen des Innenraums 10 sowie - bei Betrieb als Vakuumgebläse - zum Entleeren des Innenraums 10.

Der Sperrkörper 3 ist ausgehend von einer in Figur 1 dargestellten entleerten Stellung, in der die Membran 4o und 4u bündig in jeweils einer durch die Rahmenoberkanten gebildeten Ebene liegen, durch Druckmittelbeaufschlagung in eine expandierte Form überführbar. Während in einer in den Figuren 1 und 2 gestrichelt dargestellten Zwischenposition 12 noch ein freier Restquerschnitt 13 zwischen der Wandung 14 des Rohres 2 und der Membran 4o verbleibt, liegt die Membran 4o in der wiederum durchgezogen eingezeichneten maximalen Füllstellung (F) über gewisse Abschnitte vollständig an der Wandung 14 des Rohres 2 an.

In diesem Fall verbleiben lediglich in den Bereichen oberhalb und unterhalb der Klemmschienenabschnitte 8.1 und 8.5 freie Querschnitte in Form von Zwickeln. Diese könnten lediglich durch eine weitere sehr starke Druckerhöhung im Innenraum 10 des Sperrorgans 3 ausgefüllt werden, wobei sich hierbei jedoch eine große Membranbelastung im Bereich des Randes der Klemmschienenprofile 8 ergäbe. Es ist daher ratsam, diese freien Restquerschnitte durch angepasste Bleche 16 oder andere Dichtelemente zu verschliessen, die auf nicht näher dargestellte Weise mit der Wandung 14 des Rohres 2 verbunden sind und zwar so, dass sie den auftretenden Strömungskräften ohne Verformung standhalten können.

Um die Vorrichtung 1, beispielsweise im Falle, dass ein Membranaustausch oder Ersatz erforderlich sein sollte, ohne weiteres wieder ausgebaut werden kann, ist der Rahmen 6 der Halteeinrichtung 5 mittels zweier in der Draufsicht nach Figur 3 keilförmiger Halteelemente 17 festgelegt. Die Halteelemente 17 im Rohr 2 sind über nicht dargestellte Anker mit der Rohrwandung 14 verschraubt und so in der Lage, die in Richtung des Pfeils 18 wirkenden Strömungskräfte aufzunehmen. Ist eine Durchströmung des Rohrquerschnitts in beide Richtungen möglich, so müssen selbstverständlich auch an der gegenüberliegenden Querseite der Halteeinrichtung 5 entsprechende Halteelemente 17 vorgesehen und mit der Rohrwandung 14 verankert werden.

Figur 1a zeigt eine alternative Querschnittsform eines Halterahmens 6', bei dem die einzelnen Schenkel eine V-förmige Querschnittsgestalt besitzen. Hierdurch sind die Abschnitte der Klemmschiene 8 ebenfalls V-förmig zueinander angeordnet und gegenüber einer horizontalen Ebene geneigt. Da der Rahmen 6' umlaufend diese Querschnittsform aufweist, ist insbesondere sein Strömungswiderstand gering, so dass die durch das zusätzliche Einbauteil bewirkten hydraulischen Verluste sehr gering gehalten werden können.

In der Zeichnung nicht dargestellt ist ein starrer Druckbehälter, der außerhalb des Rohres 2 in einem über- oder unterirdischen Bauwerk angeordnet ist und eine Beschleunigung sowohl des Befüllvorgangs als auch des Entleerungsvorgangs bewirkt. Die gleichfalls nicht dargestellte, im vorliegenden Fall verwendete Fördereinrichtung ist ein Verdichter, der auch im Saugbetrieb benutzt werden kann, so dass der starre Behälter gleichfalls als Vakuumbehälter benutzbar ist. Sowohl während des Befüllvorgangs als auch während des Entleerungsvorgangs arbeiten die Fördereinrichtung und der starre Behälter zumindest zeitweise parallel zueinander. So kann es sinnvoll sein, beim Entleeren des Innenraums 10 den starren Behälter erst dann zu öffnen, wenn der Überdruck im Sperrorgan 3 bereits abgenommen und der Massenstrom zur Entleerung des Sperrorgans 3 sich aufgrund des immer geringer werdenden Druckgefälles zwischen dem Sperrorgan 3 und der Atmosphäre zunehmend verringert.

Die Montage des Sperrorgans 3, insbesondere die Verbindung der Membranen 4o, 4u mit dem Rahmen 6 erfolgt vorzugsweise außerhalb des Rohres 2, sofern eine spätere Einbringung der vormontierten Einheit in das Rohr 2 und ein Vordringen bis zum Einbauort möglich ist. Alternativ hierzu ist ein Einbringen der Vorrichtung 1 in Einzelteilen in das Rohr 2 und ein Zusammenbau am Montageort möglich.

## Patentansprüche

1. Vorrichtung (1) zur Veränderung des freien Strömungsquerschnitts (13) eines Rohres (2) oder Kanals, mit einer Halteeinrichtung (5) für ein Sperrorgan (3), das mindestens eine flexible Membran (4o, 4u) aufweist, die einen fluiddicht abgeschlossenen Innenraum (10) des Sperrorgans (3) begrenzt, wobei das Sperrorgan (3) ausgehend von einem entleerten Zustand durch Beaufschlagung des Innenraums (10) mit einem Druckmedium in einen gefüllten Zustand überführbar und dadurch volumenmäßig vergrößerbar ist, wobei der freie Strömungsquerschnitt (13) im gefüllten Zustand kleiner als im entleerten Zustand ist, **dadurch gekennzeichnet, dass** die Halteeinrichtung (5) so angeordnet ist, dass sich auf im Querschnitt des Rohres (2) oder Kanals gegenüberliegenden Seiten des Sperrorgans (3) im entleerten Zustand jeweils ein Teil des freien Strömungsquerschnitts (13) befindet.

2. Vorrichtung nach Anspruch 1, **dadurch gekennzeichnet, dass** eine von der Halteeinrichtung (5) aufgespannte Ebene im Querschnitt des Rohres (2) oder Kanals als Sehne verläuft.

3. Vorrichtung nach Anspruch 1 oder 2, **dadurch gekennzeichnet, dass** die Halteeinrichtung (5) und/ oder das Sperrorgan (3) im entleerten Zustand horizontal ausgerichtet ist.

4. Vorrichtung nach einem der Ansprüche 1 bis 3, **dadurch gekennzeichnet, dass** die Halteeinrichtung (5) einen Rahmen (6) aufweist, an dem die elastische Membran (4a, 4o) befestigt ist.

5. Vorrichtung nach Anspruch 4, **dadurch gekennzeichnet, dass** der Rahmen (6) in der Draufsicht achteckig oder oval ist.

6. Vorrichtung nach einem der Ansprüche 1 bis 5, **dadurch gekennzeichnet, dass** die Halteeinrichtung (5) eine Platte aufweist, an der die elastisch dehnbare Membran (4a, 4o) umlaufend befestigt ist.

7. Vorrichtung nach einem der Ansprüche 5 bis 6, **dadurch gekennzeichnet, dass** die größte Breite der Halteeinrichtung (5) dem Durchmesser des Rohres (2) oder des Kanals entspricht.

8. Vorrichtung nach einem der Ansprüche 5 bis 7, **dadurch gekennzeichnet, dass** die Halteeinrichtung (5) mittels an einer Wandung (14) des Rohres (2) oder des Kanals befestigter Halteelemente (17) festgelegt ist.

9. Vorrichtung nach einem der Ansprüche 1 bis 8, **dadurch gekennzeichnet, dass** in Zwickelbereichen zwischen der Wandung (14) des Rohres (2) oder Kanals und der Membran (4o, 4u) im befüllten Zustand des Sperrorgans (3) Verschlusselemente angeordnet sind.

10. Vorrichtung nach einem der Ansprüche 1 bis 9, **gekennzeichnet durch** einen Behälter, in dem ein Druckmedium zur Befüllung des Innenraums (10) des Sperrorgans (3) speicherbar ist.

11. Vorrichtung nach Anspruch 10, **dadurch gekennzeichnet, dass** der Behälter starr ist und auch als Unterdruckbehälter zur Entleerung des Innenraums (10) des Sperrorgans (3) nutzbar ist.

12. Vorrichtung nach einem der Ansprüche 1 bis 11, **dadurch gekennzeichnet, dass** ein Verdichter oder eine Pumpe zur Förderung des Druckmediums sowohl zur Druckerhöhung bei der Befüllung des Innenraums des Speicherorgans (3) als auch zur Druckabsenkung bei der Entleerung des Innenraums des Speicherorgans (3) verwendbar ist.
